# DEMANDE DE BREVET EUROPEEN

(11) **EP 0 723 355 A1**
(43) Date de publication de la demande: **24.07.1996**
(21) Numéro de dépôt: 96200091.5
(22) Date de dépôt: 15.01.1996
(51) Int. Cl.: H04L 29/06

(54) **Système de transmission à compression de données**

(30) Priorité: 18.01.1995 FR 9500530
(71) Demandeur: T.R.T. TELECOMMUNICATIONS RADIOELECTRIQUES ET TELEPHONIQUES, 75013 Paris (FR); Philips Electronics N.V., 5621 BA Eindhoven (NL)
(72) Inventeur: Behaghel, Denis, Société Civile S.P.I.D., F-75008 Paris (FR); Guy, Jean-Yves, Société Civile S.P.I.D., F-75008 Paris (FR); Espagnol, Jean-Luc, Société Civile S.P.I.D., F-75008 Paris (FR)
(74) Mandataire: Chaffraix, Jean

(57) **Abrégé**

L'invention concerne un système de transmission de données entre un émetteur et un récepteur. Les données transmises, qui sont organisées en séquence d'unités de données d'un protocole source, sont préalablement comprimées.

Conformément à l'invention les données contenues dans chaque séquence ayant été comprimées, elles sont transmises dans des champs de données d'unités de données de protocole source, et des marqueurs sont introduits pour séparer les séquences comprimées les unes des autres.

Applications: système de transmission par paquets notamment.

## Description

La présente invention concerne un système de transmission de données entre au moins un émetteur et au moins un récepteur, lesdites données, préalablement organisées en séquences d'au moins une unité de données d'un protocole source, étant comprimées pour être transmises dans des champs de données d'unités de données d'un protocole de transmission.

L'invention concerne également un commutateur destiné à être utilisé dans un réseau de transmission, et doté de moyens de compression/décompression de données pour transmettre/recevoir des données, lesdites données préalablement organisées en séquences d'au moins une unité de données d'un protocole source, étant comprimées pour être transmises dans des champs de données d'unités de données d'un protocole de transmission.

L'invention concerne également un émetteur doté de moyens pour transmettre des données, lesdites données préalablement organisées en séquences d'au moins une unité de données d'un protocole source, étant comprimées pour être transmises dans des champs de données d'unités de données d'un protocole de transmission.

L'invention concerne enfin un récepteur doté de moyens pour recevoir des données originairement organisées en séquences d'au moins une unité de données d'un protocole source puis comprimées et transmises dans des champs de données d'unités de données d'un protocole de transmission.

L'invention permet notamment d'optimiser les communications en réduisant la quantité de données à transmettre et donc les coûts et les temps de transmission.

L'invention a notamment d'importantes applications dans le domaine des transmissions sur réseau public, en particulier lorsque ces réseaux publics utilisent un mode de taxation par paquets.

Un tel système de transmission avec compression préalable des données est décrit dans la demande de brevet français n°2687259 déposée le 11 février 1992 par la société Ouest Standard Télématique. Il consiste à modifier la structure des données pendant la transmission pour réduire le nombre d'unités de données à transmettre. La procédure décrite dans ce document consiste à:
- comprimer les données contenues dans chaque unité de données du protocole source,
- associer chacun des résultats obtenus à un sous-champ de données,
- associer à chaque sous-champ de données un sous-champ d'en-tête contenant des informations nécessaires à la reconstruction de la structure de données initiale et des informations relatives à la nature des unités de données du protocole source,
- découper cette suite de sous-champs d'en-tête/sous-champs de données en éléments d'une longueur prédéterminée qui vont constituer les champs de données des unités de données du protocole de transmission.

Conformément à cette procédure, dans le cas d'une application à un réseau de transmission selon le protocole X25 du CCITT, les sous-champs d'en-tête contiennent notamment:
- une information de longueur du sous-champ de données associé,
- des informations présentes dans l'en-tête X25 des paquets de données X25 avant compression (notamment le bit Q qui indique s'il s'agit d'un paquet de données ou d'un paquet de contrôle, et le bit M qui indique l'appartenance du paquet X25 à une séquence de paquets),
- une information indiquant si les données transmises sont des données comprimées ou des données en clair.
Dans le mode de réalisation décrit, un sous-champ d'en-tête occupe deux octets dans l'unité de données du protocole de transmission.

Bien que cette procédure puisse dans certains cas apporter satisfaction, elle présente l'inconvénient d'impliquer la transmission systématique pour chaque sous-champ de données d'un sous-champ d'en-tête relativement long.

L'invention a pour but d'optimiser les systèmes de transmission dotés d'un service de compression de données, et notamment les réseaux de transmission de type X25.

Pour cela un système de transmission selon l'invention et tel que décrit dans le paragraphe introductif est caractérisé en ce qu'il comporte des moyens pour introduire, dans les champs de données d'unités de données d'un protocole de transmission, des marqueurs délimitant les séquences.

Ainsi, au lieu de transmettre, comme dans l'art antérieur, un sous-champ d'en-tête pour le résultat de la compression des données contenues dans chaque unité de données du protocole source, l'invention consiste à transmettre un marqueur pour le résultat de la compression des données de chaque séquence de données formant un message logique. En effet, lorsque le résultat de la compression des données d'une séquence occupe plusieurs unités de données du protocole de transmission, un seul marqueur est transmis pour ladite séquence.

Selon l'invention la structure des données d'origine est restituée par détection des marqueurs, sans qu'il soit nécessaire de transmettre des informations de reconstruction telles que la longueur du résultat de la compression des données de chaque séquence, ou l'indication de l'appartenance de l'unité de données du protocole source à une séquence.

Ledit marqueur est formé par concaténation à partir d'un mot réservé et d'une ou plusieurs informations relatives à la nature des données des unités de données du protocole source, lorsque de telles informations sont véhiculées dans les en-têtes des unités de données du protocole source. De telles informations sont toutefois destinées à être manipulées par un utilisateur final et n'ont aucune signification au niveau de la transmission. Elles n'interviennent donc pas dans la restitution de la structure de données initiale.

D'autres caractéristiques, détails et avantages de l'invention apparaîtront dans la description qui va suivre en regard des dessins annexés qui sont donnés à titre d'exemple non limitatif et dans lesquels:
- la figure 1 est un schéma d'un exemple de système de transmission selon l'invention,
- la figure 2 est un schéma d'un commutateur selon l'invention,
- la figure 3 est un organigramme de fonctionnement d'un commutateur d'un système de transmission selon l'invention en émission,
- la figure 4 est une représentation schématique de la structure des données émises par un tel commutateur,
- la figure 5 est un organigramme de fonctionnement d'un commutateur d'un système de transmission selon l'invention, en réception.

Dans la suite de la description le système de transmission décrit est un réseau de type X25, le protocole source et le protocole de transmission sont conformes au protocole X25. Toutefois, l'invention n'est pas limitée à ce type de système, et elle est applicable à tout protocole source conformément auquel les données sont organisées en séquences d'au moins une unité de données, quel que soit le protocole de transmission.

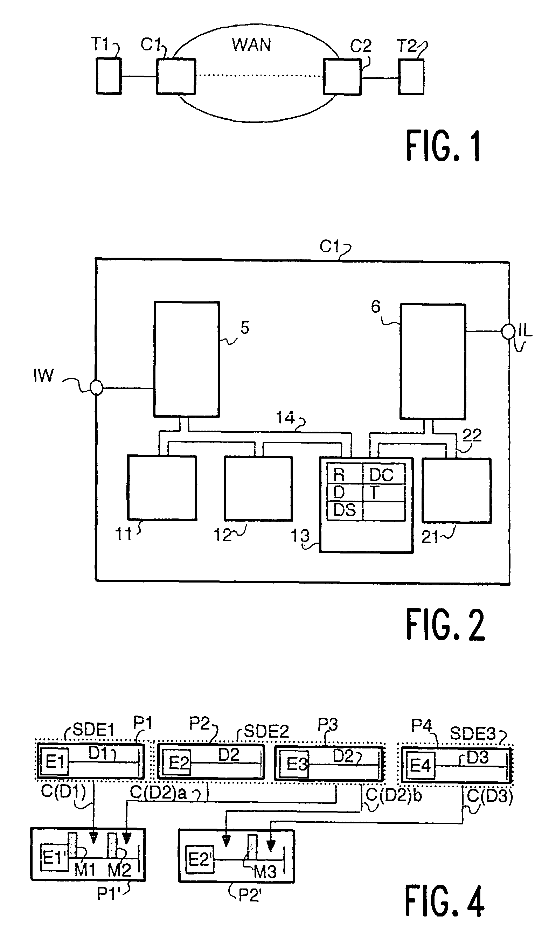

La figure 1 représente donc un système de transmission selon l'invention qui comporte un réseau WAN de type X25 constitué de deux commutateurs C1 et C2. Ces commutateurs C1 et C2 sont respectivement reliés à des terminaux T1 et T2. Ainsi, une 1communication peut être établie entre les deux terminaux T1 et T2 au travers du réseau WAN par l'intermédiaire des commutateurs C1 et C2
qui jouent le rôle d'émetteur ou de récepteur selon qu'ils transmettent des données en provenance d'un terminal vers le réseau WAN ou qu'à l'inverse ils transmettent des données en provenance du réseau WAN vers un terminal.

Chaque commutateur est doté d'une fonction de compression/décompression de façon à comprimer les données qu'il reçoit en provenance d'un terminal avant de les retransmettre sur le réseau WAN, et à décomprimer les données qu'il reçoit en provenance du réseau WAN avant de les retransmettre à un terminal.

La figure 2 donne une représentation du commutateur C1. Il comporte une interface IW vers le réseau WAN et une interface IL vers le terminal T1. L'interface IW vers le réseau WAN est relié à un microprocesseur 5 qui est par exemple un 68302 de Motorola. Ce microprocesseur 5 est lui-même relié par un bus 14 à une mémoire 11 dite mémoire de configuration de l'équipement et à une mémoire statique 12 qui contient les instructions de fonctionnement du microprocesseur 5, notamment celles nécessaires à la mise en place de l'invention, et à une mémoire vive 13 contenant des données. L'interface IL est reliée à un processeur de communication 6.

A titre d'exemple, lorsque le terminal T1 est une station Ethernet d'un réseau local, ce processeur de communication 6 est par exemple formé à partir d'un transmetteur Intel 82503 et d'un processeur Intel 82596DX.

Ce processeur de communication 6 est lui-même relié par un bus 22 à une mémoire statique 21 contenant les instructions de fonctionnement du processeur de communication 6 et à la mémoire de données 13 précitée.

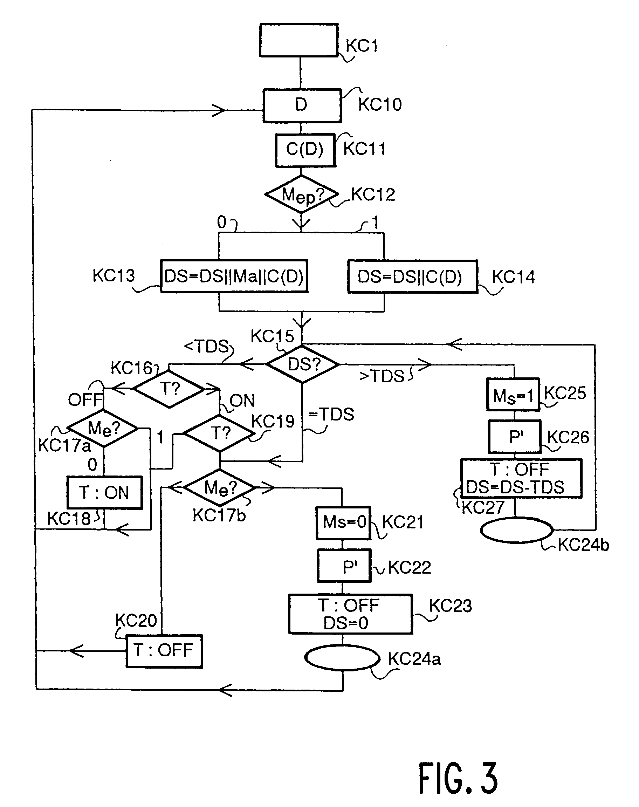

La figure 3 donne un organigramme de fonctionnement d'un tel commutateur en émission, c'est-à-dire lorsqu'il transmet des données en provenance d'un terminal vers le réseau WAN.

Des données sont tout d'abord reçues sur le port IL du commutateur dans un format quelconque. En reprenant l'exemple d'une interconnexion de réseaux locaux Ethernet, les données reçues sont par exemple contenues dans des trames Ethernet. Puis ces données sont converties au format du protocole source, c'est-à dire que des paquets X25 contenant les données reçues sont fournis en entrée de l'organigramme représenté sur la figure 3 pour être comprimés conformément à l'invention. Puis des unités de données du protocole de transmission contenant les données comprimées sont émis sur le port IW du commutateur vers le réseau WAN. Dans cet exemple de réalisation, les unités de données du protocole de transmission sur le réseau sont des paquets X25. La signification des différentes cases de l'organigramme de la figure 3 est donnée ci-dessous:
- case KC1 : Cette case correspond à l'état initial, il n'y a pas de paquet précédemment reçu ni de données de sortie stockés dans les emplacements mémoire. Un temporisateur, noté T, est inactif.
- case KC10 : réception et stockage dans un emplacement mémoire D des données d'une unité de données du protocole source (il s'agit ici de paquets X25). Le fonctionnement se poursuit à la case KC11.
- case KC11 : les données de D sont comprimées selon un algorithme de compression, de type Lempel-Ziv par exemple (sur la figure l'opération de compression est symbolisée par la lettre C). Puis le fonctionnement se poursuit à la case KC12.
- case KC12 : test pour déterminer si le paquet courant est le début d'une séquence complète SDE de paquets. Cette information est donnée par le bit M, noté Mep, contenu dans l'en-tête du paquet précédant le paquet courant. S'il s'agit du premier paquet d'une séquence SDE, ou d'un paquet isolé, le fonctionnement se poursuit à la case KC13, sinon il se poursuit à la case KC14.
- case KC13 : Un marqueur Ma suivi des données comprimées C(D) sont ajoutés par une opération de concaténation à la suite des données de sortie courantes stockées dans un emplacement mémoire DS.
L'opération de concaténation est symbolisée par le sigle ¦¦ sur les figures. Le marqueur Ma est formé par un mot réservé, jamais utilisé comme mot de code par la compression. Lorsque la taille des mots de code émis par la compression est variable, le mot réservé est un mot de taille minimale. Ce mot réservé est suivi du bit Q, contenu dans l'en-tête du paquet d'entrée courant, qui indique la nature des données contenues dans le paquet (données ou information de contrôle utilisées par des protocoles de niveau OSI supérieur). Bien que véhiculé dans l'en-tête du paquet X25, ce bit Q n'a aucune signification au niveau réseau. Il constitue toutefois une information utilisateur qui doit être restituée lors de la décompression, d'où le choix de le transporter dans le marqueur Ma. Le fonctionnement se poursuit à la case KC15.
- case KC14 : Les données C(D) sont ajoutées à la suite des données de sortie courantes stockées dans l'emplacement mémoire DS par une opération de concaténation. Le fonctionnement se poursuit à la case KC15.
- case KC15 : test sur la taille des données contenues dans l'emplacement mémoire DS. Si elle est inférieure à la taille maximale TDS d'un paquet de sortie, le fonctionnement se poursuit à la case KC16. Si elle est égale, il se poursuit à la case KC17b, et si elle est supérieure, il se poursuit à la case KC25.
- case KC16 : le temporisateur T est utilisé pour fixer un temps d'attente maximum avant l'envoi d'un paquet qui n'est pas plein. Ce temporisateur est susceptible de prendre deux états : un état actif (symbolisé par le sigle ON sur la figure) et un état inactif (symbolisé par le sigle OFF). Cette étape du fonctionnement consiste à tester l'état du temporisateur T. Si le temporisateur est inactif, le fonctionnement se poursuit à la case KC17a, sinon il se poursuit à la case KC19.
- case KC17a : test pour déterminer si le paquet en entrée est le dernier d'une séquence complète de paquets. Cette information est donnée par le bit M, noté Me, contenu dans l'en-tête du paquet d'entrée courant. S'il s'agit du dernier paquet d'une séquence, ou s'il s'agit d'un paquet isolé, le fonctionnement se poursuit à la case KC18, sinon il reprend à la case KC10.
- case KC18 : le temporisateur passe à l'état actif (ON sur la figure) et le fonctionnement reprend à la case KC10.
- case KC19 : la valeur du temporisateur T est testée. S'il est arrivé à échéance, le fonctionnement se poursuit à la case KC17b, sinon il reprend à la case KC10.
- case KC17b : test pour déterminer si le paquet en entrée est le dernier d'une séquence complète de paquets. Cette information est donnée par le bit M, noté Me, contenu dans l'en-tête du paquet d'entrée courant. Si le paquet reçu en entrée est le dernier paquet d'une séquence, ou s'il s'agit d'un paquet isolé, le fonctionnement se poursuit à la case KC21, sinon il se poursuit à la case KC20.
- case KC20 : le temporisateur passe à l'état inactif (indiqué par le sigle OFF sur la figure), puis le fonctionnement reprend à la case KC10.
- case KC21 : l'en-tête du paquet X25 de sortie qui va être émis, est formée, et son bit M, noté Ms, prend la valeur 0. Le fonctionnement se poursuit à la case KC22.
- case KC22 : un paquet X25 de sortie, noté P', est formé avec cet en-tête X25 et des données de l'emplacement mémoire DS. Le fonctionnement se poursuit à la case KC23.
- case KC23 : le temporisateur passe à l'état inactif (OFF), et les TDS premiers bits des données sont effacés de l'emplacement mémoire DS. Puis le fonctionnement se poursuit à la case KC24a.
- case KC24a : le paquet P' est émis sur le port IW du commutateur. Le fonctionnement reprend à la case KC10.
- case KC25 : l'en-tête du paquet X25 de sortie qui va être émis est formée, et son bit M, noté Ms, prend la valeur 1. Le fonctionnement se poursuit à la case KC26.
- case KC26 : un paquet X25 de sortie plein, noté P', est formé avec cet en-tête X25 et les TDS premiers bits des données contenues dans l'emplacement mémoire DS. Le fonctionnement se poursuit à la case KC27.
- case KC27 : le temporisateur passe à l'état inactif (OFF), et les données contenues dans le paquet P' de sortie sont effacées de l'emplacement mémoire DS. Puis le fonctionnement se poursuit à la case KC24b.
- case KC24b : le paquet P' de sortie est émis sur le port IW du commutateur. Le fonctionnement reprend à la case KC15.

Ainsi, si la taille des données de sortie contenues dans l'emplacement mémoire DS dépasse celle du champ données de l'unité de données du protocole de transmission, une telle unité de données est émise sans attente, constituée, lorsque le paquet d'entrée est le premier paquet d'une séquence complète SDE ou lorsqu'il constitue un paquet isolé, d'un marqueur et du début des données. Dans le cas d'un paquet X25, le bit Ms de l'en-tête du paquet émis est positionné à 1. De même si la suite des données de DS constitue une ou plusieurs autres unités de données pleines, elles sont de même émises sans attente, avec un bit Ms à 1 pour les paquets X25. Si la fin des données de DS coïncide avec celle du paquet X25, le bit Ms est alors positionné à 0. En revanche, si la fin des données de DS ou si les données de DS ne constituent pas une unité de données pleine, aucune unité de données n'est émise et, lorsque le paquet d'entrée est le dernier paquet d'une séquence complète SDE ou lorsqu'il constitue un paquet isolé, le temporisateur T est activé. Tant que ce temporisateur n'est pas arrivé à échéance, le résultat de la compression d'une nouvelle séquence SDE est ajouté par concaténation à la suite de l'unité de données, précédé d'un marqueur Ma. Dès que l'unité de données est pleine, elle est émise, et le temporisateur est désactivé. Lorsqu'une séquence de données entière a été traitée et que le temporisateur est à échéance, l'unité de données est transmise qu'elle soit ou non complète.

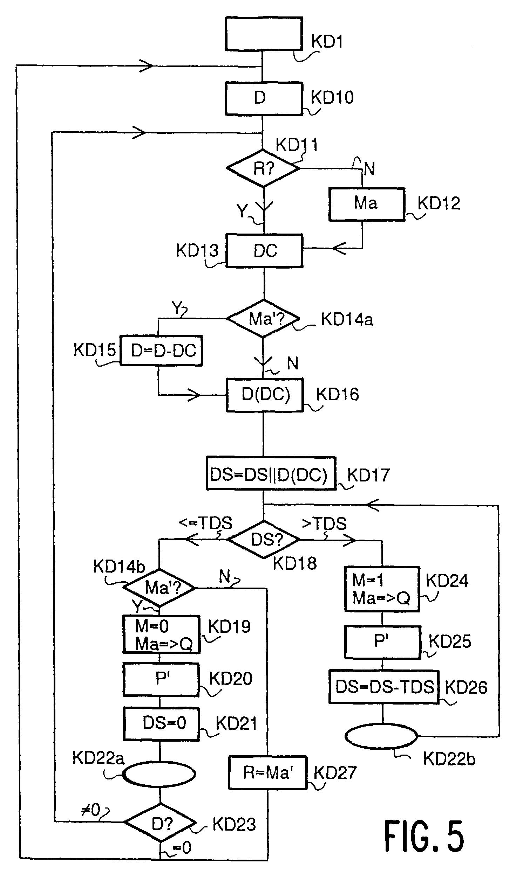

La figure 4 donne un exemple d'une telle transformation entre unités de données du protocole source et unités de données du protocole de transmission avec compression des données. E1, E2, E3 et E4 sont respectivement les en-têtes X25 des paquets P1, P2, P3 et P4 à comprimer. Le paquet P1 constitue une séquence SDE1, les paquets P2 et P3 une séquence SDE2 et le paquet P4 une séquence SDE3. Les données contenues dans les séquences SDE1, SDE2 et SDE3 sont respectivement notées D1, D2 et D3. Les champs M des en-têtes E1, E3 et E4 sont donc à 0, tandis que celui de l'en-tête E2 est à 1. Le flux comprimé comporte deux paquets X25 notés P1' et P2' dont les en-têtes sont respectivement notés E1' et E2'. Le paquet P1' comporte un premier marqueur M1 suivi des données comprimées C(D1), ce qui ne suffit pas à le remplir. Le temporisateur T est donc activé à la fin du traitement de la séquence SDE1, et le paquet P1' n'est pas émis immédiatement. Puis la séquence SDE2 est comprimée. Les données C(D2) résultant de cette compression, précédées d'un marqueur M2 sont ajoutées par concaténation à la suite des données comprimées C(D1) dans le paquet P1'. Leur taille dépasse la place disponible dans le paquet P1'. Le premier paquet P1' est donc émis dès qu'il est plein avec la première partie C(D2)a des données C(D2), et le temporisateur T est désactivé. Le bit M de l'en-tête El' est positionné à 1, pour indiquer que la suite C(D2)b des données C(D2) est contenue dans le paquet suivant P2'. Cette suite C(D2)b est inscrite dans le champ données du paquet P2'. Elle ne suffit à le remplir de telle sorte que le temporisateur T est activé et que les données comprimées suivantes C(D3), résultat de la compression de la séquence SDE3, précédées d'un marqueur M3, sont ajoutées à sa suite par concaténation dans le paquet P2'. Le temporisateur T étant alors arrivé à échéance, le paquet P2' est transmis avec dans son en-tête E2' un champ M positionné à 0 puisque le résultat de la compression de la séquence d'entrée SDE3 correspond à la fin du paquet P2'.

Lorsque le commutateur fonctionne en réception, c'est-à-dire lorsqu'il transmet des données en provenance du réseau WAN vers un terminal, des unités de données du protocole de transmission sont reçues sur son port IW. Elles sont décomprimées et les unités de données du protocole source qui contiennent les données décomprimées sont converties dans le format adéquate (Ethernet pour reprendre l'exemple précédent) pour être émises sur le port IL du commutateur.

Les opérations de décompression et de restitution des unités de données du protocole source, relatives à la présente invention, sont décrites en détail sur l'organigramme de la figure 5. La signification des cases de la figure 5 est donnée ci-dessous dans l'ordre d'exécution:
- case KD1 : cette case correspond à l'état initial, il n'y a pas de marqueur ni de données de sortie stockés dans les emplacements mémoire.
- case KD10 : réception et stockage dans un emplacement mémoire D des données d'une unité de données du protocole de transmission (il s'agit ici de paquets X25). Le fonctionnement se poursuit à la case KD11.
- case KD11 : test pour déterminer si un marqueur Ma relatif aux données D a préalablement été enregistré dans l'emplacement mémoire R. Si c'est le cas, le début de la séquence de données SDE à laquelle appartiennent les données de D a été transmis dans une unité de données précédente du protocole de transmission, et le fonctionnement se poursuit en KD13. Sinon il se poursuit en KD12.
- case KD12 : Les données reçues correspondent à un début de séquence SDE ou à une unité de données isolée. Le marqueur Ma associé est lu et stocké dans l'emplacement mémoire R.
- case KD13 : détermination dans les données de D de la zone de données comprimées qui est délimitée par un second marqueur Ma', ou par la fin des données. Cette zone est stockée dans un emplacement mémoire DC.
- case KD14a : test pour déterminer si un marqueur Ma' a été trouvé. Si oui, le fonctionnement se poursuit à la case KD15, sinon il se poursuit à la case KD16.
- case KD15 : on est dans le cas où les données de DC correspondent à une séquence entière de paquets ou à la fin d'une séquence entière de paquets. Les données comprimées de DC sont effacées de l'emplacement mémoire D. Le fonctionnement se poursuit en case KD16.
- case KD16 : les données comprimées de DC sont décomprimées. Le fonctionnement se poursuit en case KD17.
- case KD17 : les données décomprimées D(DC) sont ajoutées par une opération de concaténation à la suite des données de sortie courantes stockées dans un emplacement mémoire DS. Le fonctionnement se poursuit en case KD18.
- Case KD18 : test sur la taille des données de sortie de DS. Si elle est inférieure ou égale à la taille maximale d'un paquet de sortie, le fonctionnement se poursuit à la case KD14b, sinon il se poursuit à la case KD24.
- case KD14b : test pour déterminer si un marqueur Ma' a été trouvé. Si Ma' a été trouvé, le fonctionnement se poursuit en case KD19, sinon il se poursuit à la case KD27.
- case KD27 : l'emplacement mémoire R est vidé et le fonctionnement reprend à la case KD10.
- case KD19 : l'en-tête du paquet X25 qui va être émis en sortie est formé, et son bit M prend la valeur 0. La valeur de son bit Q est tirée du marqueur Ma. Le fonctionnement se poursuit à la case KD20.
- case KD20 : un paquet X25 noté P' est formé avec cet en-tête X25 et les données de sortie stockées dans l'emplacement mémoire DS. Le fonctionnement se poursuit à la case KD21.
- case KD21 : l'emplacement mémoire DS est vidé. Le second marqueur Ma' est enregistré dans l'emplacement mémoire R et le fonctionnement se poursuit à la cas KD22a.
- case KD22a : le paquet P' est converti au format utilisateur et émis sur le port IL du commutateur. Le fonctionnement se poursuit à la case KD23.
- case KD23 : test pour déterminer s'il reste des données à traiter dans D. Cela correspond notamment au cas où le paquet reçu en entrée de la décompression contient le résultat de la compression de plusieurs séquences de données SDE. Le fonctionnement reprend alors à la case KD11. Dans le cas contraire, il reprend en case KD10.
- case KD24 : l'en-tête du paquet X25 qui va être émis en sortie est formée, et son bit M prend la valeur 1. La valeur de son bit Q est tirée du marqueur Ma. Le fonctionnement se poursuit à la case KD25.
- case KD25 : un paquet X25 noté P', plein, est formé avec cet en-tête X25 et le début des données de sortie de DS. Le fonctionnement se poursuit à la case KD26.
- case KD26 : les données contenues dans P', c'est-à-dire les TDS premiers bits, sont effacées de l'emplacement mémoire DS. Le fonctionnement se poursuit à la case KD22b.
- case KD22b : le paquet P' est converti au format utilisateur et émis sur le port IL du commutateur. Le fonctionnement reprend à la case KD18.

Ainsi, les bits M des paquets décomprimés ne sont pas transmis mais reconstitués lors de la décompression en fonction de la taille des paquets à délivrer en sortie. Les seules informations qui doivent nécessairement être transmises sur le réseau sont les informations utilisateurs véhiculées dans les en-têtes des unités de données du protocole source qui ne peuvent pas être restituées à partir de la structure du flux reçu.

Bien que l'invention ait été décrite pour un commutateur fonctionnant en émission ou en réception, il va de soi qu'elle s'applique à tout émetteur doté de moyens de transmission de données dans des champs de données d'unités de données d'un protocole de transmission, lesdites données originairement organisées en séquences d'au moins une unité de données d'un protocole source, ayant été préalablement comprimées. De même, l'invention s'applique à tout récepteur doté de moyens pour recevoir des données originairement organisées en séquences d'au moins une unité de données d'un protocole source puis comprimées et transmises dans des champs de données d'unités de données d'un protocole de transmission.

## Revendications

1. Système de transmission de données entre au moins un émetteur (C1, C2) et au moins un récepteur (C2, C1), lesdites données, préalablement organisées en séquences (SDE1, SDE2, SDE3) d'au moins une unité de données (P1, P2, P3, P4) d'un protocole source, étant comprimées pour être transmises dans des champs de données d'unités de données (P1', P2') d'un protocole de transmission,
caractérisé en ce qu'il comporte des moyens pour introduire dans lesdits champs de données des marqueurs (Ma, M1, M2, M3) délimitant lesdites séquences.

2. Système de transmission selon la revendication 1, caractérisé en ce que ledit marqueur est constitué à partir d'un mot réservé qui est différent de ceux utilisés par la compression.

3. Système de transmission selon la revendication 2, caractérisé en ce que ledit émetteur comporte des moyens pour former le marqueur associé à une séquence par concaténation dudit mot réservé et d'au moins une information (Q) relative à la nature, selon le protocole source, des données contenues dans ladite séquence.

4. Système de transmission selon l'une des revendications 1 à 3, caractérisé en ce que ledit récepteur comporte des moyens de détection desdits marqueurs et des moyens de décompression des données comprimées pour restituer chaque séquence de données.

5. Commutateur (C1, C2) destiné à être utilisé dans un réseau de transmission (WAN), et doté de moyens de compression/décompression de données pour transmettre/recevoir des données, lesdites données préalablement organisées en séquences d'au moins une unité de données d'un protocole source, étant comprimées pour être transmises dans des champs de données d'unités de données d'un protocole de transmission,
caractérisé en ce qu'il comporte des moyens pour introduire dans lesdits champs de données, en émission, des marqueurs délimitant chacune des séquences comprimées,
et en ce qu'il comporte des moyens pour détecter, en réception, lesdits marqueurs de façon à restituer lesdites séquences à partir des données décomprimées.

6. Commutateur selon la revendication 5, caractérisé en ce que ledit marqueur est constitué à partir d'un mot réservé qui n'est jamais utilisé par la compression.

7. Commutateur selon la revendication 6, caractérisé en ce qu'il comporte des moyens pour former le marqueur associé à une séquence par concaténation dudit mot réservé et d'au moins une information relative à la nature, selon le protocole source, des données contenues dans ladite séquence.

8. Emetteur doté de moyens pour transmettre des données, lesdites données préalablement organisées en séquences d'au moins une unité de données d'un protocole source, étant comprimées pour être transmises dans des champs de données d'unités de données d'un protocole de transmission,
caractérisé en ce qu'il comporte des moyens pour introduire dans lesdits champs de données, en émission, des marqueurs délimitant chacune des séquences comprimées.

9. Emetteur selon la revendication 8, caractérisé en ce que ledit marqueur est constitué à partir d'un mot réservé qui n'est jamais utilisé par la compression.

10. Récepteur doté de moyens pour recevoir des données originairement organisées en séquences d'au moins une unité de données d'un protocole source puis comprimées et transmises dans des champs de données d'unités de données d'un protocole de transmission, caractérisé en ce que, des marqueurs ayant été introduits en émission dans lesdits champs de données pour délimiter chacune des séquences comprimées, il comporte des moyens pour détecter lesdits marqueurs de façon à restituer lesdites séquences à partir des données décomprimées.
